# EUROPÄISCHE PATENTANMELDUNG

(11) **EP 1 526 299 A1**
(43) Veröffentlichungstag der Anmeldung: **27.04.2005**
(21) Anmeldenummer: 04450186.4
(22) Anmeldetag: 06.10.2004
(51) Int. Cl.: F16D 3/72

(54) **Ausgleichskupplung**

(30) Priorität: 20.10.2003 AT 16552003
(71) Anmelder: Ellergon Antriebstechnik GmbH, 5300 Hallwang/Salzburg (AT)
(72) Erfinder: Geislinger, Matthias, Dipl.-Ing., 5026 Salzburg (AT); Geislinger, Cornelius, Dipl.-Ing., 5020 Salzburg (AT)
(74) Vertreter: Hübscher, Helmut, Dipl.-Ing.

(57) **Zusammenfassung**

Es wird eine Ausgleichskupplung zur Antriebsverbindung zweier Wellen (1, 2) mit einer zwei stirnseitige Membranen (3) verbindenden Kupplungshülse (4) aus faserverstärktem Kunststoff beschrieben, die aus zwei miteinander über radial nach außen abstehende Verbindungsflansche (9) verschraubten Hülsenabschnitten (8) besteht, wobei die ringscheibenförmigen Membranen (3) im Bereich ihres inneren Umfanges einen Anschlußflansch (5) mit entlang eines Teilkreises angeordneten Durchtrittslöchern (12) für Befestigungsschrauben (14) bilden und an ihrem äußeren Umfang einstückig mit der Kupplungshülse (8) verbunden sind. Um vorteilhafte Konstruktionsbedingungen zu schaffen, wird vorgeschlagen, daß die Kupplungshülse (8) einen kleineren Außendurchmesser (d) als der um den Durchmesser der Durchtrittslöcher (12) des Anschlußflansches (5) verringerten Teilkreisdurchmesser (D) besitzt, daß die Hülsenabschnitte (8) stirnseitige Wandscheiben (10) aufweisen, die über eine Umfangswand (11) an die zugehörigen Membranen (3) anschließen, und daß in den Wandscheiben (10) zu den Durchtrittslöchern (12) der Anschlußflansche (5) koaxiale Durchgriffsöffnungen (13) für die Befestigungsschrauben (14) vorgesehen sind.

## Beschreibung

Die Erfindung bezieht sich auf eine Ausgleichskupplung zur Antriebsverbindung zweier Wellen mit einer zwei stirnseitige Membranen verbindenden Kupplungshülse aus faserverstärktem Kunststoff, die aus zwei miteinander über radial nach außen abstehende Verbindungsflansche verschraubten Hülsenabschnitten besteht, wobei die ringscheibenförmigen Membranen im Bereich ihres inneren Umfanges einen Anschlußflansch mit entlang eines Teilkreises angeordneten Durchtrittslöchern für Befestigungsschrauben bilden und an ihrem äußeren Umfang einstückig mit der Kupplungshülse verbunden sind.

Ausgleichskupplungen mit stirnseitigen Membranen und einer diese Membranen verbindenden Kupplungshülse erlauben bei einer ausreichenden Torsionssteifigkeit einen einfachen Ausgleich eines Wellenversatzes. Um den für den Ein- und Ausbau solcher Ausgleichskupplungen benötigten Platzbedarf zu verringern, ist es bekannt (AT 403 837 B), die Kupplungshülse, die am Außenumfang der Membranen angesetzt ist, zu teilen und die beiden Hülsenabschnitte über radial nach außen abstehende Verbindungsflansche zu verschrauben. Durch diese Maßnahme wird es möglich, beispielsweise die motorseitige Welle über den im Bereich des inneren Umfanges der Membran vorgesehenen Anschlußflansch von der Innenseite des Hülsenabschnittes her an die motorseitige Welle anzuflanschen, bevor der andere Hülsenteil mit der zugehörigen Membran eingesetzt und die beiden Hülsenabschnitte über ihre Verbindungsflansche verschraubt werden. Die Verschraubung zwischen der getriebeseitigen Welle und der zugehörigen Membran muß allerdings von außen erfolgen, was einen der Länge der Befestigungsschrauben entsprechenden axialen Platzbedarf auf der der Ausgleichskupplung abgewandten Seite des Wellenflansches der getriebeseitigen Welle mit sich bringt, was die Baulänge vergrößert bzw. die Beugelänge der Ausgleichskupplung verringert. Abgesehen davon ist das Anflanschen der Ausgleichskupplung an die motorseitige Welle von der Innenseite des zugehörigen Hülsenabschnittes aufwendig.

Darüber hinaus ist es beim Einsatz sowohl einer Ausgleichskupplung als auch einer drehelastischen Kupplung bekannt (AT 406 183 B), die drehelastische Kupplung innerhalb eines Hülsenabschnittes der geteilten Kupplungshülse der Ausgleichskupplung anzuordnen, deren anderer Hülsenabschnitt einen kleineren Durchmesser aufweist und am Innenumfang der stirnseitigen Membran angesetzt ist, so daß diese Membran den Anschlußflansch im Bereich ihres Außenumfanges bildet. Der im Bereich des Außenumfanges vorgesehene Anschlußflansch der Membran erlaubt zwar ein Anflanschen dieses Kupplungsteiles an den Wellenflansch von der Kupplungsseite her außerhalb des Hülsenabschnittes, doch erzwingt diese Maßnahme einen entsprechend großen Wellenflansch, ohne die Baulänge verkürzen zu können, weil ja der andere Kupplungsteil von der Wellenseite her mit der drehelastischen Kupplung verschraubt werden muß.

Der Erfindung liegt somit die Aufgabe zugrunde, eine Ausgleichskupplung der eingangs geschilderten Art so auszugestalten, daß nicht nur die Einund Ausbaubedingungen verbessert werden können, sondern sich auch günstigere Konstruktionsverhältnisse hinsichtlich der Baulänge bzw. der Beugelänge ergeben.

Die Erfindung löst die gestellte Aufgabe dadurch, daß die Kupplungshülse einen kleineren Außendurchmesser als der um den Durchmesser der Durchtrittslöcher des Anschlußflansches verringerten Teilkreisdurchmesser besitzt, daß die Hülsenabschnitte stirnseitige Wandscheiben aufweisen, die über eine Umfangswand an die zugehörigen Membranen anschließen, und daß in den Wandscheiben zu den Durchtrittslöchern der Anschlußflansche koaxiale Durchgriffsöffnungen für die Befestigungsschrauben vorgesehen sind.

Da die Kupplungshülse einen kleineren Außendurchmesser als der um den Durchmesser der Durchtrittslöcher des Anschlußflansches verringerten Teilkreisdurchmesser besitzt, können die beiden Kupplungsteile jeweils von der Kupplungsseite her an die anschließenden Wellen angeflanscht werden. Zu diesem Zweck brauchen die über eine Umfangswand an den Außenumfang der Membranen anschließenden Wandscheiben an den Stirnseiten der Hülsenabschnitte lediglich Durchgriffsöffnungen für die Befestigungsschrauben aufzuweisen, die vom Zwischenraum zwischen den Wandscheiben einerseits und den Verbindungsflanschen der Hülsenabschnitte anderseits eingesetzt und angezogen werden können. Das Befestigen der beiden Kupplungsteile von der Kupplungsseite her setzt keinen Platzbedarf axial außerhalb der Ausgleichskupplung voraus, so daß nicht nur die Ein- und Ausbaubedingungen verbessert werden, sondern auch eine Verkürzung der Baulänge bzw. eine Vergrößerung der Beugelänge erreicht wird.

Stützen sich die Befestigungsschrauben kopfseitig auf Hülsen ab, die auf der den Wandscheiben zugekehrten Seite der Anschlußflansche der Membranen abgestützt sind, so können für die Befestigungsschrauben aufgrund der Hülsenanordnung vergleichsweise große Dehnlängen erreicht werden, was zu einer guten dynamischen Schraubensicherung führt. Das zu übertragende Drehmoment wird dabei kraftschlüssig über die Lochleibung und nicht über die Befestigungsschrauben selbst übertragen. Die Befestigungsschrauben können daher für den Anschlußflansch zumindest einer Membran eine das übertragbare Drehmoment begrenzende Sollbruchstelle bilden, wenn die Reibungskräfte im Bereich der Lochleibung überschritten und die Befestigungsschrauben auf Scherung belastet werden.

Da die Hülsenabschnitte aufgrund ihres verkleinerten Außendurchmessers nicht unmittelbar, sondern über Wandscheiben an den Außenumfang der Membranen anschließen, eröffnet sich durch die im wesentlichen parallel zu den Membranen angeordneten Wandscheiben die Möglichkeit, auch diese Wandscheiben als Membranen zu nützen, die entsprechend steifer als die stirnseitigen Membranen ausgebildet sind, was die Verlagerungsfähigkeit der Ausgleichskupplung erhöht, ohne auf eine sonst durch eine biegeweichere Membran gefährdete, ausreichende Beulsicherheit verzichten zu müssen.

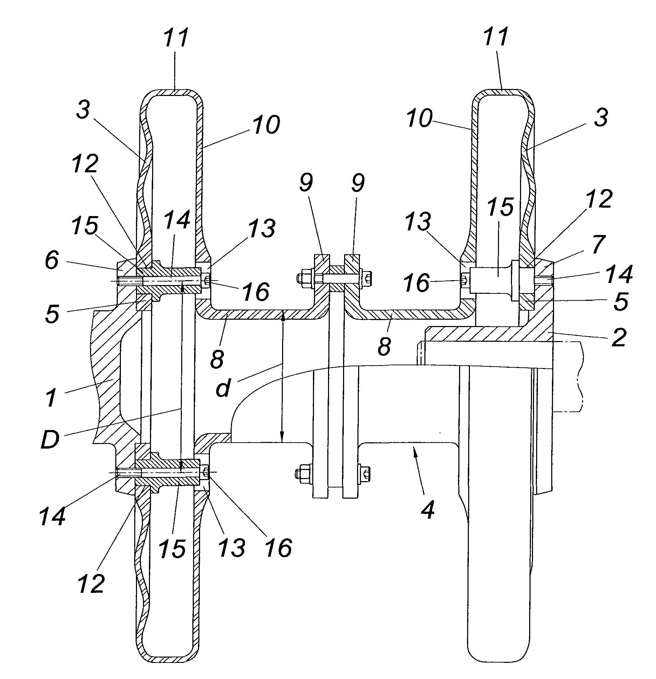

In der Zeichnung ist der Erfindungsgegenstand beispielsweise dargestellt, und zwar wird eine erfindungsgemäße Ausgleichskupplung in einer vereinfachten, zum Teil aufgerissenen Seitenansicht gezeigt.

Die zwischen einer angetriebenen Welle 1 und einer anzutreibenden Welle 2 vorgesehene Ausgleichkupplung weist stirnseitige Membranen 3 auf, die durch eine Kupplungshülse 4 miteinander torsionssteif verbunden sind und im Bereich ihres Innenumfanges einen Anschlußflansch 5 zum Verbinden der Ausgleichkupplung mit den Flanschen 6, 7 der angetriebenen Welle 1 und der anzutreibenden Welle 2 bilden. Die Kupplungshülse 4 aus faserverstärktem Kunststoff setzt sich aus zwei Hülsenabschnitten 8 zusammen, die über radial nach außen vorstehende Verbindungsflansche 9 miteinander verschraubt sind. Auf der den Verbindungsflanschen 9 gegenüberliegenden Stirnseite tragen die Hülsenabschnitte 8 Wandscheiben 10, die über eine Umfangswand 11 einstükkig mit den Membranen 3 verbunden sind.

Zum Anflanschen der Ausgleichskupplung an den Wellenflanschen 6, 7 sind die Anschlußflansche 5 der Membranen 3 mit Durchtrittslöchern 12 versehen, deren Teilkreisdurchmesser mit D bezeichnet ist. Da der Außendurchmesser d der Kupplungshülse 4 kleiner als der um den Durchmesser der Durchtrittslöcher 12 verringerten Teilkreisdurchmesser D ist und die Wandscheiben 10 mit den Durchtrittslöchern 12 fluchtende Durchgriffsöffnungen 13 für Befestigungsschrauben 14 bilden, können die beiden Kupplungsteile von der Kupplungsseite her mit den Wellenflanschen 6 verschraubt werden. Diese Verschraubung erfolgt über Hülsen 15, die auf der den Wandscheiben 10 zugekehrten Seite der Anschlußflansche 5 an diesen abgestützt sind und selbst eine axiale Abstützung für den Schraubenkopf 16 bilden, so daß für die Befestigungsschrauben 14 durch die Hülsen 15 eine vergleichsweise große Dehnlänge sichergestellt werden kann, die für eine gute dynamische Schraubensicherung sorgt. Die Drehmomentübertragung erfolgt über die Reibungskräfte im Bereich der Lochleibung. Die Befestigungsschrauben 14 können somit als das maximal übertragbare Drehmoment begrenzende Sollbruchstelle dienen, die wirksam wird, wenn nach einem Überschreiten der Reibungskräfte im Bereich der Lochleibung die Befestigungsschrauben auf Scherung beansprucht werden.

Die Wandscheiben 10 können zur Vergrößerung der Verlagerungsfähigkeit der Ausgleichskupplung als Membranen ausgebildet sein, die jedoch steifer als die stirnseitigen Membranen 3 auszubilden sind, um die notwendige Beulsicherheit zu erreichen. Damit gelingt es, bei einer ausreichenden Beulsicherheit einen sich aufgrund von Fluchtungs- und Winkelfehlern ergebenden Versatz der beiden Wellen 1, 2 auszugleichen, der mit dem Einsatz biegeweicherer Membranen wegen der dann fehlenden Beulsicherheit nicht ohne weiteres ausgleichbar wäre.

## Patentansprüche

1. Ausgleichskupplung zur Antriebsverbindung zweier Wellen mit einer zwei stirnseitige Membranen verbindenden Kupplungshülse aus faserverstärktem Kunststoff, die aus zwei miteinander über radial nach außen abstehende Verbindungsflansche verschraubten Hülsenabschnitten besteht, wobei die ringscheibenförmigen Membranen im Bereich ihres inneren Umfanges einen Anschlußflansch mit entlang eines Teilkreises angeordneten Durchtrittslöchern für Befestigungsschrauben bilden und an ihrem äußeren Umfang einstückig mit der Kupplungshülse verbunden sind, **dadurch gekennzeichnet, daß** die Kupplungshülse (8) einen kleineren Außendurchmesser (d) als der um den Durchmesser der Durchtrittslöcher (12) des Anschlußflansches (5) verringerten Teilkreisdurchmesser (D) besitzt, daß die Hülsenabschnitte (8) stirnseitige Wandscheiben (10) aufweisen, die über eine Umfangswand (11) an die zugehörigen Membranen (3) anschließen, und daß in den Wandscheiben (10) zu den Durchtrittslöchern (12) der Anschlußflansche (5) koaxiale Durchgriffsöffnungen (13) für die Befestigungsschrauben (14) vorgesehen sind.

2. Ausgleichskupplung nach Anspruch 1, **dadurch gekennzeichnet, daß** sich die Befestigungsschrauben (14) kopfseitig auf Hülsen (15) abstützen, die auf der den Wandscheiben (10) zugekehrten Seite der Anschlußflansche (5) abgestützt sind.

3. Ausgleichskupplung nach Anspruch 2, **dadurch gekennzeichnet, daß** die Befestigungsschrauben (14) für den Anschlußflansch (5) zumindest einer Membran (3) eine das übertragbare Drehmoment begrenzende Sollbruchstelle bilden.

4. Ausgleichskupplung nach einem der Ansprüche 1 bis 3, **dadurch gekennzeichnet, daß** die stirnseitigen Wandscheiben (10) der Hülsenabschnitte (8) eine gegenüber den anschließenden Membranen (3) steifere Membran bilden.
